# EUROPÄISCHE PATENTSCHRIFT

(11) **EP 0 826 887 B1**
(45) Veröffentlichungstag und Bekanntmachung des Hinweises auf die Patenterteilung: **20.06.2001**
(21) Anmeldenummer: 97113610.6
(22) Anmeldetag: 07.08.1997
(51) Int. Cl.: F16B 7/02

(54) **Verbindungseinrichtung**
Fastening device
Dispositif de fixation

(30) Priorität: 30.08.1996 CH 124396
(43) Veröffentlichungstag der Anmeldung: 04.03.1998
(73) Patentinhaber: USM Holding AG, 3073 Gümligen (CH)
(72) Erfinder: Künzi, Stephan, 3604 Thun (CH)
(74) Vertreter: Roshardt, Werner Alfred, Dipl.-Phys.

(56) Entgegenhaltungen:
- EP-A- 0 455 945
- US-A- 2 308 542
- US-A- 5 232 304

## Beschreibung

### Technisches Gebiet

Die Erfindung betrifft eine Verbindungsvorrichtung, insbesondere zum Verbinden von zwei Stabelementen, mit einer Spreizkeilkonstruktion, welche in einem rohrförmigen Ende des ersten Stabelements durch Spreizen verklemmbar und über ein Anschlussstück mit dem zweiten Stabelement verbindbar ist, wobei die Spreizkeilkonstruktion einen Spreizdorn und eine auf den Spreizdorn aufsetzbare Spreizhülse umfasst.

### Stand der Technik

Eine Verbindungskonstruktion der eingangs genannten Art ist z.B aus der US 4.921.370 bekannt. Bei dieser ist eine Stütze mit einer radial durchgehenden Bohrung für eine Spannschraube vorgesehen. Zum Befestigen einer rohrförmigen Strebe ist ein zweiteiliges zylindrisches Spreizsystem mit einem Spreizdorn und einer Spreizhülse vorgesehen. An einem Ende des Spreizsystems ist eine an die zylindrische Oberfläche der Stütze angepasste Anschlussfläche ausgebildet. Der Spreizdorn wird durch einen kegelstumpfförmig verjüngten Abschnitt gebildet. Auf diesen kann eine Spreizhülse mit kegelmantelförmiger Innenfläche aufgeschoben werden. In der Spreizhülse ist eine Gewindemutter für die Spannschraube gehalten. Die Spannschraube wird durch die Bohrung der Stütze und den ersten Teil des Spreizsystems hindurch in die genannte Gewindemutter eingeschraubt. Beim Spannen wird die Spreizhülse, die an einer Längsseite offen ist, radial gespreizt und verkeilt sich in der Strebe. Nachteilig bei dieser Verbindungsanordnung ist, dass die Spannschraube durch die Stütze hindurch verlaufen muss. Es ist daher nicht möglich, auf derselben Höhe mehrere Streben anzubringen.

Aus der EP 0 455 945 B1 ist eine weitere Verbindungsanordnung bekannt. Um eine (z.B. horizontale) Strebe an einer (z.B. vertikalen) Stütze zu befestigen, werden ein Haltering und eine Klemmkeilvorrichtung verwendet. Der einteilige Haltering ist so ausgebildet, dass er mit geringem Spiel auf die Stütze aufgeschoben werden kann. Die Klemmkeilvorrichtung, welche auf der einen Seite mit einem Anschlussstück und auf der anderen mit einem Spreizkeilsystem ausgerüstet ist, ist zweiteilig. Das am einen Teil angeformte, gabelförmig ausgebildete Anschlussstück kann rittlings auf den Haltering aufgesetzt werden, so dass die beiden Gabelarme seitlich des Halterings auf der Stütze aufliegen. Um zusammen mit dem zweiten Teil als Spreizkeilsystem wirken zu können, verfügt der genannte erste Teil über einen rohrförmigen Abschnitt, der schräg aufgeschnitten ist, um eine Keilfläche zu bilden. Der zweite Teil ist komplementär schräg geschnitten. Zum Festklemmen der Strebe wird deren Ende auf das rohrförmige Klemmkeilsystem aufgeschoben. Mit einer Spannschraube, welche die beiden Keilhälften in Längsrichtung durchdringt und mit einem Ende in eine radialen Gewindebohrung des Halterings eingreift, kann der zweite Teil gegen den ersten gedrückt werden, wobei er aufgrund der Keilfläche zur Seite abgedrängt wird und so zu einer Spreizung der Klemmkeilvorrichtung führt.

Eine weitere Befestigungsvorrichtung ist aus der US 4.365.907 bekannt. Sie ist zum Befestigen eines Vierkantrohrs an der Aussenwand eines Trägers bestimmt. Das Spreizsystems ist durch einen pyramidenstumpfförmigen Mittelteil und zwei symmetrisch dazu angeordnete Seitenkeile gebildet. Die beiden Seitenkeile liegen an der Innenwand des Vierkantrohrs an und werden beim Spannen durch den Mittelteil nach aussen gedrückt. Die Spannschraube wird durch eine Bohrung im Träger eingeführt, läuft zwischen den Seitenkeilen hindurch und greift in eine Gewindebohrung des Mittelteils ein.

Die aus dem Stand der Technik bekannten Keilverbindungen vermögen aus verschiedenen Gründen nicht zu befriedigen. Z.T. ist die Montage aufwendig, z.T. ist auch die Stabilität ungenügend.

### Darstellung der Erfindung

Aufgabe der Erfindung ist es, eine Vorrichtung der eingangs genannten Art anzugeben, die eine stabile Verbindung gewährleistet. Insbesondere soll die Spreizkeilkonstruktion beim Spannen eine optimale Entwicklung der Kräfte zulassen.

Die Lösung der Aufgabe ist durch die Merkmale des Anspruchs 1 definiert. Gemäss der Erfindung weisen Spreizdorn und Spreizhülse im Achsenquerschnitt derart ovale Konturen auf, dass die im Bereich der Scheitelpunkte der Konturen (zwischen Spreizhülse und Spreizdorn) gebildeten Keilflächen im wesentlichen nicht kleiner sind als die in entsprechender Stellung an einer Mantelfläche bzw. Aussenwand der Spreizhülse gebildeten Kraftschlussflächen.

Ein wichtiger Aspekt der Erfindung besteht darin, dass die Gleitreibung zwischen den (zur Längsachse geneigt verlaufenden) Keilflächen im Verhältnis zur Haftreibung zwischen Mantelfläche und Rohrinnenwand aufgrund der gewählten geometrischen Anordnung sehr klein ist. Beim Spannen des Spreizkeilsystems wird in erster Linie die Spreizhülse auf dem Spreizdorn gleiten, bis die radiale Ausdehnung so gross ist, dass die Haftreibung ins Spiel kommt. Im Rahmen der Erfindung ist es möglich, ohne reibungserhöhende Oberflächenbeschichtungen (zwischen Mantelfläche und Rohrinnenwand) zu arbeiten.

Im Vergleich zur rotationssymmetrischen Keilverbindung gemäss US 4.921.370 hat die Erfindung viel günstigere Flächenverhältnisse. Beim genannten Stand der Technik hat die Keilfläche nämlich zwangsläufig einen kleineren Radius und folglich eine kleinere Oberfläche als die Mantelfläche der Spreizhülse. Entsprechend ist der Flächendruck zwischen den Keilflächen grösser als an der Mantelfläche. Bei gleich grossen Reibungskoeffizienten heisst das, dass die Reibungskraft an den Keilflächen a priori grösser ist als an der Mantelfläche, wo doch für eine gute Verbindung die Kräfteverhältnisse eigentlich gerade umgekehrt sein sollten. Erschwerend kommt bei der bekannten Keilverbindung der weitere Nachteil einer (mit zunehmender Verjüngung des Spreizkeils) abnehmenden Keilfläche hinzu. Im Gegensatz dazu ändern sich bei der Erfindung die Flächenverhältnisse in Achsenrichtung nicht.

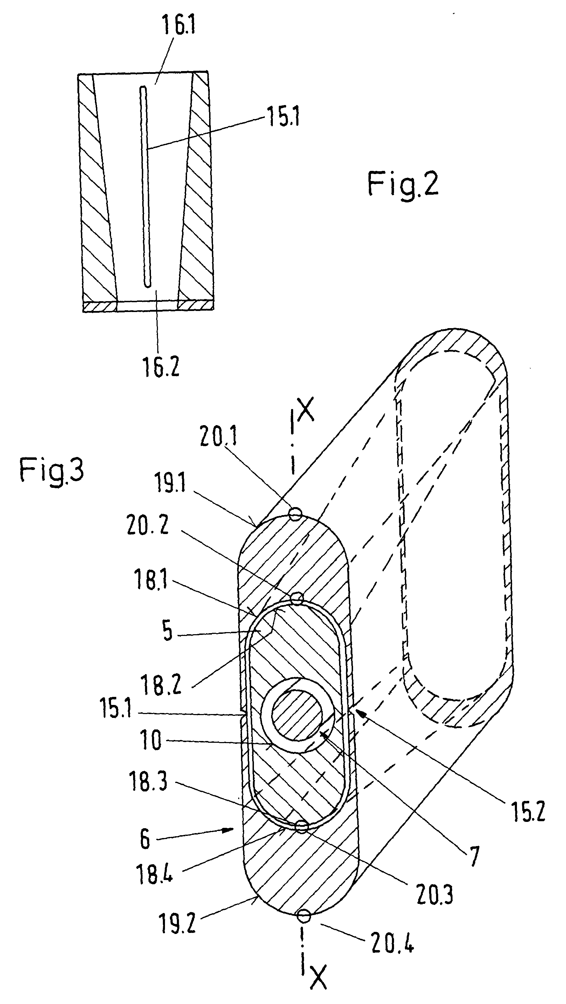

Im Vergleich zu der aus der EP 0 455 945 B1 bekannten Keilverbindung hat die Erfindung nicht nur eine viel grössere Keilfläche (und damit günstigere Verhältnisse der Reibungskräfte), sondern es kann auch keine die Verbindung hemmende Kraftkomponente auftreten. Wenn nämlich bei der bekannten Keilverbindung gegen Ende des Spannvorgangs die beiden Keilhälften aufgrund der Haftreibung an der Strebe (vgl. dortige Fig. 2, Bezugszeichen 3d) sich festzusetzen beginnen, wird beim weiteren Spannen die eine Keilhälfte (11b) die Strebe gegen den Sockelteil (33a) drücken, während die andere Keilhälfte (11a) eine weitere Bewegung gegen den Sockelteil behindert. Dies führt zu einer unerwünschten Kraftkomponente in Gegenrichtung. Im Unterschied dazu wird bei der Erfindung das rohrförmige Ende des ersten Stabelements stets und unbehindert gegen das zweite Stabelement gezogen.

Die ovale Form hat auch den Vorteil, dass die Keilverbindung im Rohr selbstpositionierend ist. Im übrigen kann die erfindungsgemässe Keilverbindung im Rohr vormontiert werden. Beide dieser Vorteile sind dem Stand der Technik gemäss US 4.365.907 fremd. Bei der dort beschriebenen Keilverbindung ist die Vormontage im Rohr (vgl. dortiges Bezugszeichen 2) deshalb nicht möglich, weil die Spannschraube (15) von der Innenseite des Rohres (3) gespannt werden muss. Dadurch, dass die Spreizkeilkonstruktion selbst nicht gegen das Rohr (3) gedrückt wird (sondern unabhängig vom Sockelteil (17) ist), besteht zudem ein beträchtliches Stabilitätsproblem. Im übrigen ist auch bei dieser Entgegenhaltung (vgl. dortige Fig. 2) die Keilfläche kleiner als die Berührungsfläche mit der Innenwand des Rohres (2).

Die Keilflächen und die Kraftschlussflächen weisen vorzugsweise etwa die gleiche Krümmung bzw. den gleichen Krümmungsverlauf auf. Der Übergang zum flachen Bereich der Kontur kann fliessend oder unstetig sein.

In den einander diametral gegenüberliegenden Bereichen starker Krümmung (Scheitelpunkt-Bereich) sind innenseitig der Keilhülse spiegelsymmetrisch zueinander ausgebildete, keilförmige Wandverdickungen angeformt. An den in radialer Richtung unbelasteten flachen Bereichen der Kontur sind in der Mantelfläche spiegelsymmetrisch zueinander angeordnete Sollbruchstellen vorgesehen.

Zur Bildung der Sollbruchstellen sind z.B. Längsschlitze vorgesehen, die endseitig durch schmale Stege begrenzt sind. Beim Spreizen der Hülse werden die Stege gedehnt bzw. gebrochen. Anstelle von Längsschlitzen können auch reduzierte Wandstärken vorgesehen sein. Die beiden Sollbruchstellen sind so zu bemessen, dass sie unter Belastung gleichzeitig nachgeben bzw. brechen.

Gemäss einer besonders bevorzugten Ausführungsform sind die keilförmigen Wandverdickungen der Spreizhülse aus Aluminium. Bei hinreichend hohem Druck passt sich dieses Material einerseits an die Innenwand des Stabes und andererseits an die Aussenwand des Spreizdorns an. Es sind auch andere Materialien mit derartigen Eigenschaften bevorzugt. Die Hülse kann z.B. als Aluminiumdruckgussstück ausgebildet sein. Damit die von der Spannschraube ausgeübte Kraft möglichst gut auf den gesamten Querschnitt der Spreizhülse verteilt wird, ist stirnseitig eine Stahlplatte angebracht. Im gleichen Sinn kann auch der Spreizdorn als einteiliges Aluminiumdruckgussstück ausgebildet sein.

Mit Vorteil ist der Spreizdorn oval und bezüglich zwei zueinander senkrechten Ebenen, welche durch die Längsmittelachse verlaufen, spiegelsymmetrisch ausgebildet. Durch diese Symmetrie ist sichergestellt, dass beim Spreizen die Kräfte optimal diametral zueinander auftreten und zu einer symmetrischen Zugbelastung in den flachen Seiten des Hülsenmantels führen.

Am Spreizdorn ist z.B. ein gabelförmiges Anschlusselement ausgebildet, welches rittlings auf einen auf das zweite Stabelement aufschiebbaren Haltering aufsetzbar ist. Diese Anschlusstechnik sichert eine hohe Stabilität in einer durch die Längsachse des zweiten Stabelements definierten Ebene. Sie hat weiter den Vorteil, dass das erste Stabelement an beliebiger Stelle am zweiten befestigt werden kann, da letzteres keine Wanddurchbrüche für irgendwelche Spannschrauben benötigt.

Es ist wichtig, dass die Verbindungsvorrichtung unverrückbar im ersten Stab befestigt werden kann. Ein Hilfsmittel, um dieses Ziel zu erreichen, stellt die umlaufende Schulter am Fusse des Spreizdorns dar. Auf ihr kann die Strebe mit ihrer Stirnseite aufliegen. Sie erleichtert auch die genaue Positionierung des Stabendes vor dem Spannen des Keilsystems.

Zum Spannen der Spreizkeilkonstruktion ist eine Spannschraube vorgesehen, deren Kopf auf einem dem Anschlussstück gegenüberliegenden Ende der Spreizhülse abstützbar ist und die in eine im Haltering vorgesehen Gewindebohrung eingeschraubt wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a, b: Eine schematische Darstellung einer erfindungsgemässen Verbindungskonstruktion in zwei zueinander senkrechten Längsschnitten;
- Fig. 2: eine schematische Darstellung einer erfindungsgemässen Spreizhülse im Achsenlängsschnitt;
- Fig. 3: ein schematische Darstellung zur Erläuterung des Prinzips.

Grundsätzlich sind in den Figuren gleiche Teile mit gleichen Bezugszeichen versehen.

### Wege zur Ausführung der Erfindung

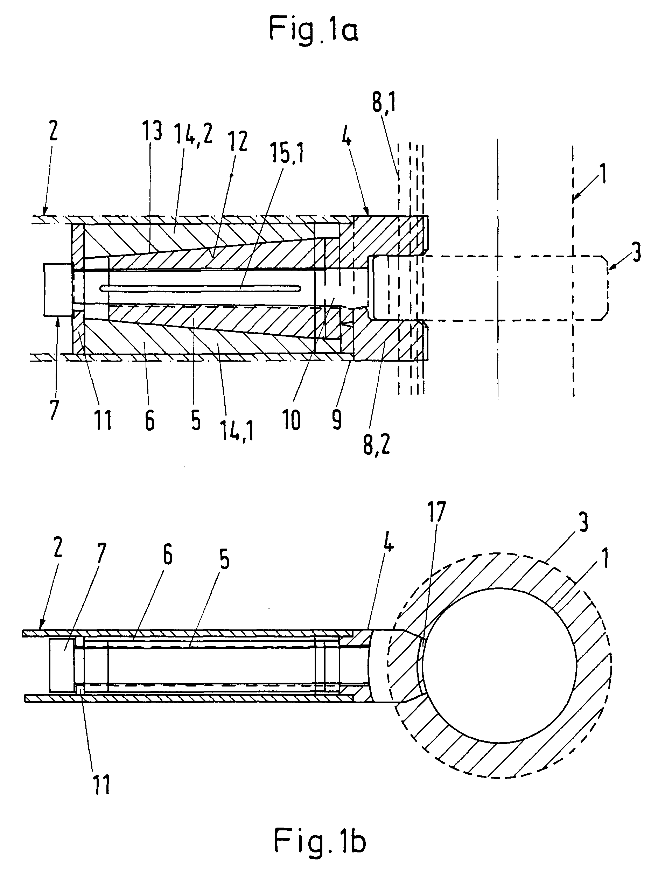

Fig. 1a, b zeigt eine Stütze 1, die mit einer Strebe 2 verbunden ist. Ein Haltering 3 umschliesst die Stütze 1. Er verfügt über mehrere radiale Bohrungen (in den Figuren nicht dargestellt). Ein gabelförmiges Anschlussstück 4 sitzt rittlings auf dem Haltering 3 und umschliesst diesen oben und unten mit seinen beiden Gabelarmen 8.1, 8.2. Stirnseitig der beiden Gabelarme 8.1, 8.2 sind konkave Anschlussflächen 17 ausgebildet, welche auf der zylindrischen Oberfläche der Stütze 1 aufliegen.

An der Rückseite des Anschlussstücks 4 ist eine Schulter 9 gebildet, auf welcher die Strebe 2 mit ihrer Stirnseite aufliegen kann. Die Form des verjüngten Ansatzes der Schulter 9 ist mit möglichst geringem Spiel an den Innenquerschnitt der Strebe 2 angepasst. Mit Vorteil ist die der Innenwand der Strebe 2 zugewandte Seite des Schulteransatzes leicht konisch ausgebildet. Dadurch wird das Aufsetzen der Strebe 2 erleichtert, ohne dass auf den satten spielarmen Sitz verzichtet werden muss.

Am Anschlussstück 4 ist hinter der Schulter 9 ein Spreizdorn 5 ausgebildet. Er ist im Querschnitt oval und verjüngt sich im Längsschnitt gemäss Fig. 1a nach hinten zunehmend. Wie aus Fig. 1b zu erkennen ist, bleibt die Wandstärke in Richtung der kleinen Halbachse des ovalen Querschnitts dagegen konstant. Der sich verjüngende Teil der Aussenwand 12 bildet eine Keilfläche mit einem Winkel von weniger als 10° (z.B. 5°). Der Spreizdorn 5 ist von einer axialen Längsbohrung 10 durchsetzt.

Auf den Spreizdorn 5 ist eine Spreizhülse 6 aufgesetzt. Ihre Innenfläche 13 ist an die Form der Aussenfläche 12 angepasst. D.h. im Achsenquerschnitt betrachtet ist sie oval, wobei sich die lange Halbachse von hinten nach vorn (d.h. in Richtung des Anschlussstücks 4) vergrössert. An der hinteren Stirnseite der Spreizhülse 6 ist eine Stahlplatte 11 angeordnet. Sie verfügt über eine zentrale Bohrung. Eine Spannschraube 7 wird von hinten durch die genannte Bohrung und die Längsbohrung 10 nach vorne zum Haltering 3 geführt, wo sie in eine der genannten radialen Gewindebohrungen eingeschraubt werden kann. Beim Anziehen der Spannschraube 7 werden die keilförmig ausgebildeten Wände 14.1, 14.2 in diametral entgegengesetzten Richtungen auseinander getrieben, so dass sich die Spreizkeilkonstruktion in der Strebe 2 festklemmt.

Wie aus Fig. 2 ersichtlich ist, hat die Spreizhülse 6 zwei Längsschlitze 15.1, 15.2. Sie sind spiegelbildlich zueinander an den flach ausgebildeten Längsseiten der Spreizhülse 6 angeordnet (d.h. auf der Achse x in Fig. 3). Weiter ist aus Fig. 2 ersichtlich, dass z.B. der Längsschlitz 15.1 endseitig durch Stege 16.1, 16.2 begrenzt ist. (Der Längsschlitz 15.2 ist in der gleichen Weise durch Stege begrenzt, um eine spiegelsymmetrisch Anordnung zu erhalten.)

Fig. 3 zeigt einen Achsenquerschnitt an einer beliebigen Stelle. Zur Orientierung ist die Spreizhülse 6 perspektivisch dargestellt. Ferner sind auch der Spreizdorn 5, die Längsbohrung 10 und die Spannschraube 7 eingezeichnet.

Im Sinne der Erfindung sind die Konturen in diesem Querschnitt oval, wobei jeweils im Bereich der Scheitelpunkte 20.1 - 20.4 die Kraftschlussflächen 19.1, 19.2 und die Keilflächen 18.1 - 18.4 gebildet sind. Die gekrümmten Bereiche der Konturen haben etwa denselben Krümmungsradius bzw. denselben Krümmungsverlauf. Aus dem Gesagten ergibt sich, dass die Keilflächen (d.h. genau genommen deren Konturen im Querschnitt) im wesentlichen nicht kleiner sind als die Kraftschlussflächen (bzw. deren Querschnittskonturen).

Wie aus Fig. 3 ersichtlich ist, verändern sich zwar die Querschnittsflächen in Richtung der Längsachse, nicht aber die Krümmungen der ovalen Konturen.

Beim Spreizen der Hülse wird gemäss der Erfindung nur in x-Richtung eine Spreizkraft angewendet. Die Kraft entfaltet sich dabei spiegelsymmetrisch zur Längsmittelachse der Spreizkeilkonstruktion. Die Stege 16.1, 16.2 sind so dünn bzw. schmal ausgeführt, dass sich beide Längsschlitze 15.1, 15.2 (durch Dehnung der Stege 16.1, 16.2 gegebenenfalls bis zum Bruch) "synchron" d.h. gleichzeitig und in gleichem Ausmass ausdehnen können. Dadurch dass die Spreizhülse 6 und der Spreizdorn 5 oval und spiegelsymmetrisch ausgebildet sind, ist sichergestellt, dass beide flachen Wände der Spreizhülse 6 in gleichem Ausmass gedehnt werden und die Spreizkraft optimal in diejenigen Wandteile der Strebe einwirken, die eine starke Krümmung (d.h. einen kleinen Krümmungsradius) haben.

Gemäss einer bevorzugten Ausführungsform sind Spreizdorn 5 und Spreizhülse 6 aus Aluminium gefertigt. Wenn nun beim Spannen ein hinreichend hoher Druck erzeugt wird, dann passt sich die Aussenwand der Hülse an die Innenwand der (typischerweise aus Stahl bestehenden) Rohrstrebe an und sichert auf diese Weise eine optimale Verbindung.

Die Stabilität der erfindungsgemässen Verbindung hängt nicht zuletzt auch damit zusammen, dass der Spreizdorn und das Anschlussstück ein einteiliges Formstück bilden. Weiter ist zu beachten, dass beim Spannen der Spreizkeilkonstruktion die Spreizhülse 6 das Ende des Stabes 2 gegen die Schulter 9 zieht. Aufgrund der erfindungsgemässen Querschnittsverhältnisse ist es möglich, mit einem verhältnismässig kleinen Keilwinkel von z.B. 5° zu arbeiten. Der grösste Teil der Spannkraft wird so in den Haftreibungskontakt (zwischen Spreizhülse und Rohrinnenwand) eingeleitet (und nicht im Keilflächenkontakt verbraucht).

Zusammenfassend ist festzustellen, dass durch die Erfindung eine Verbindungskonstruktion mit hoher Belastbarkeit und grosser Montageflexibilität geschaffen worden ist.

## Patentansprüche

1. Verbindungsvorrichtung, insbesondere zum Verbinden von zwei Stabelementen (1, 2), mit einer Spreizkeilkonstruktion, welche in einem rohrförmigen Ende des ersten Stabelements (2) durch Spreizen kraftschlüssig verklemmbar und über ein Anschlussstück (4) mit dem zweiten Stabelement (1) verbindbar ist, wobei die Spreizkeilkonstruktion einen Spreizdorn (5) und eine auf den Spreizdorn (5) aufsetzbare Spreizhülse (6) umfasst, dadurch gekennzeichnet, dass Spreizdorn (5) und Spreizhülse (6) im Achsenquerschnitt derart ovale Konturen aufweisen, dass die zwischen Spreizhülse (6) und Spreizdorn (5) im Bereich der Scheitelpunkte (20.1 - 20.4) der Konturen gebildeten Keilflächen (18.1 - 18.4) im wesentlichen nicht kleiner sind als die in entsprechender Stellung an einer Mantelfläche der Spreizhülse (6) gebildeten Kraftschlussflächen (19.1, 19.2).

2. Verbindungsvorrichtung nach Anspruch 1, dadurch gekennzeichnet, dass die Keilflächen (18.1 - 18.4) und die Kraftschlussflächen (19.1, 19.2) etwa die gleiche Krümmung bzw. den gleichen Krümmungsverlauf aufweisen.

3. Verbindungsvorrichtung nach Anspruch 1 oder 2, dadurch gekennzeichnet, dass an der Spreizhülse (6) im Bereich der Scheitelpunkte (20.1 - 20.4) innenseitig spiegelsymmetrisch keilförmige Wandverdickungen (14.1, 14.2) angeformt sind, und dass an den in radialer Richtung unbelasteten flachen Bereichen der ovalen Kontur in der Mantelfläche spiegelsymmetrisch zueinander angeordnete Sollbruchstellen (15.1, 15.2, 16.1, 16.2) ausgebildet sind.

4. Verbindungsvorrichtung nach einem der Ansprüche 1 bis 3, dadurch gekennzeichnet, dass zur Bildung der Sollbruchstellen Längsschlitze (15.1, 15.2) vorgesehen sind, die endseitig durch Stege (16.1, 16.2) begrenzt sind.

5. Verbindungsvorrichtung nach einem der Ansprüche 2 bis 4, dadurch gekennzeichnet, dass die keilförmigen Wandverdickungen (14.1, 14.2) der Spreizhülse (6) aus Aluminium bestehen und dass stirnseitig eine Stahlplatte (11) zum Abstützen eines Spannelements (7) angebracht ist.

6. Verbindungsvorrichtung nach einem der Ansprüche 1 bis 5, dadurch gekennzeichnet, dass der Spreizdorn (5) bezüglich zweier zueinander senkrechten und durch eine Längsmittelachse des Spreizdorns (5) verlaufenden Ebenen spiegelsymmetrisch ausgebildet ist.

7. Verbindungsvorrichtung nach einem der Ansprüche 1 bis 6, dadurch gekennzeichnet, dass das Anschlussstück (4) am Spreizdorn (5) gabelförmig ausgebildet ist, und dass es rittlings auf einen auf das zweite Stabelement (1) aufschiebbaren Haltering (3) aufsetzbar ist.

8. Verbindungsvorrichtung nach einem der Ansprüche 1 bis 7, dadurch gekennzeichnet, dass der Spreizdorn (5) als einteiliges Aluminiumdruckgussstück ausgebildet ist.

9. Verbindungsvorrichtung nach einem der Ansprüche1 bis 8, dadurch gekennzeichnet, dass der Spreizdorn (5) eine umlaufende Schulter (9) aufweist, auf welcher das Ende des ersten Stabelements (2) mit seiner Stirnseite aufliegen kann.

10. Verbindungsvorrichtung nach einem der Ansprüche 1 bis 9, dadurch gekennzeichnet, dass eine Spannschraube (7) vorgesehen ist, deren Kopf auf einem dem Anschlussstück (4) gegenüberliegenden Ende der Spreizhülse (6) abstützbar ist und die in eine im Haltering (3) vorgesehen Gewindebohrung einschraubbar ist.

## Claims

1. Connection arrangement, in particular for connecting two rod elements (1, 2), having an expansion wedge structure which can be non-positively locked in a tubular end of the first rod element (2) by expansion and which can be connected to the second rod element (1) via a connecting element (4), the expansion wedge structure comprising an expansion mandrel (5) and an expansion sleeve (6), which can be mounted on the expansion mandrel (5), characterised in that the expansion mandrel (5) and the expansion sleeve (6) have, in axial cross-section, oval contours such that the wedge faces (18.1 - 18.4), which are formed between the expansion sleeve (6) and the expansion mandrel (5) in the region of the extremities (20.1 - 20.4) of the contours, are substantially no smaller than the non-positive-locking faces (19.1, 19.2) which are formed at the corresponding position on an outer surface of the expansion sleeve (6).

2. Connection arrangement according to claim 1, characterised in that the wedge faces (18.1 - 18.4) and the non-positive-locking faces (19.1, 19.2) have approximately the same curvature or the same curve path.

3. Connection arrangement according to claim 1 or claim 2, characterised in that wedge-shaped wall thickened portions (14.1, 14.2) are formed as mirror images on the inside of the expansion sleeve (6) in the region of the extremities (20.1 - 20.4), and in that predetermined breaking points (15.1, 15.2, 16.1, 16.2), which are arranged as mirror images of each other in the outer surface, are formed at the flat regions, which are unstressed in the radial direction, of the oval contour.

4. Connection arrangement according to any one of claims 1 to 3, characterised in that elongate slots (15.1, 15.2) are provided to form the predetermined breaking points and are delimited at the ends by webs (16.1, 16.2).

5. Connection arrangement according to any one of claims 2 to 4, characterised in that the wedge-shaped wall thickened portions (14.1, 14.2) of the expansion sleeve (6) are composed of aluminium, and in that a steel plate (11) is fitted at the end face to support a fastening element (7).

6. Connection arrangement according to any one of claims 1 to 5, characterised in that the expansion mandrel (5) is formed in an axially symmetrical manner relative to two planes which are perpendicular to each other and which extend through a longitudinal centre axis of the expansion mandrel (5).

7. Connection arrangement according to any one of claims 1 to 6, characterised in that the connecting element (4) is shaped in the manner of a fork on the expansion mandrel (5), and in that it can be mounted astride a holding ring (3) which can be pushed onto the second rod element (1).

8. Connection arrangement according to any one of claims 1 to 7, characterised in that the expansion mandrel (5) is in the form of an integral aluminium die-cast element.

9. Connection arrangement according to any one of claims 1 to 8, characterised in that the expansion mandrel (5) has a peripheral shoulder (9), on which the end of the first rod element (2) can rest at the end face thereof.

10. Connection arrangement according to any one of claims 1 to 9, characterised in that there is provided a locking screw (7), whose head can be supported at one end, opposite the connecting element (4), of the expansion sleeve (6) and which can be screwed into a threaded hole provided in the holding ring (3).

## Revendications

1. Dispositif de liaison, en particulier pour relier deux éléments formant barre (1, 2), avec une construction à coin d'écartement, susceptible d'être bloquée par serrage dans une extrémité tubulaire du premier élément formant barre (2), par une liaison par interaction de force, par écartement et susceptible d'être reliée, par l'intermédiaire d'une pièce de raccordement (4), au deuxième élément formant barre (1), la construction à coin d'écartement comprenant un mandrin d'écartement (5), et un manchon d'écartement (6) susceptible d'être placée sur le mandrin d'écartement (5), caractérisé en ce que le mandrin d'écartement (5) et le manchon d'écartement (6) présentent, observé en coupe transversale axiale, des contours ovales tels que les surfaces de coin (18.1 à 18.4), constituées entre le manchon d'écartement (6) et le mandrin d'écartement (5), dans la zone des sommets (20.1 à 20.4) des contours, ne sont pratiquement pas plus petites que les surfaces de liaison à interaction de forces (19.1, 19.2) constituées dans la position correspondante sur une surface d'enveloppe du manchon d'écartement (6).

2. Dispositif de liaison selon la revendication 1, caractérisé en ce que les surfaces de coin (18.1 à 18.4) et les surfaces de liaison à interaction de forces (19.1, 19.2) présentent à peu près la même courbure ou la même allure de courbure.

3. Dispositif de liaison selon la revendication 1 ou 2, caractérisé en ce que sur le manchon d'écartement (6) sont formés, d'un seul tenant dans la zone des sommets (20.1 à 20.4), des épaississements de parois (14.1, 14.2) cunéiformes répondant à une symétrie spéculaire intérieurement, et en ce que, sur les zones plates, non chargées en direction radiale, du contour ovale sont réalisé, dans la surface d'enveloppe, des points destinés à la rupture (15.1, 15.2, 16.1, 16.2) disposés les uns par rapport aux autres dans la surface d'enveloppe, en répondant à une symétrie spéculaire.

4. Dispositif de liaison selon l'une des revendications 1 à 3, caractérisé en ce que des fentes longitudinales (15.1, 15.2), limitées côté extrémité par des nervures (16.1, 16.2), sont prévues pour former les points destinés à la rupture.

5. Dispositif de liaison selon l'une quelconque des revendications 2 à 4, caractérisé en ce que les épaississements de parois (14.1, 14.2) cunéiformes du manchon d'écartement (6) sont réalisés en aluminium et en ce que, frontalement, une plaque en acier (11) est montée pour assurer l'appui d'un élément de serrage (7).

6. Dispositif de liaison selon l'une quelconque des revendications 1 à 5, caractérisé en ce que le mandrin d'écartement (5) est conformé de façon à répondre à une symétrie spéculaire par rapport à deux plans, perpendiculaires entre eux et passant par un axe longitudinal du mandrin d'écartement (5).

7. Dispositif de liaison selon l'une quelconque des revendications 1 à 6, caractérisé en ce que la pièce de raccordement (4) est réalisée sur le mandrin d'écartement (6) selon une forme en fourche, et en ce qu'elle peut être placée à cheval sur un anneau de support (3) susceptible d'être enfilé sur le deuxième élément formant barre (1).

8. Dispositif de liaison selon l'une quelconque des revendications 1 à 7, caractérisé en ce que le mandrin d'écartement (7) est réalisé sous la forme d'une pièce moulée sous pression en aluminium, réalisée d'un seul tenant.

9. Dispositif de liaison selon l'une quelconque des revendications 1 à 8, caractérisé en ce que le mandrin d'écartement (5) présente un épaulement (9) de périphérique, sur lequel l'extrémité du premier élément formant barre (2) peut reposer par sa face frontale.

10. Dispositif de liaison selon l'une quelconque des revendications 1 à 9, caractérisé en ce qu'est prévu une vis de serrage (7), dont la tête est susceptible de prendre appui sur une extrémité, opposée à la pièce de raccordement (4), du manchon d'écartement (6) et qui est susceptible d'être vissée dans un trou taraudé, prévu dans l'anneau de maintien (3).
